# EUROPÄISCHE PATENTSCHRIFT

(11) **EP 0 819 036 B1**
(45) Veröffentlichungstag und Bekanntmachung des Hinweises auf die Patenterteilung: **21.04.1999**
(21) Anmeldenummer: 96909025.7
(22) Anmeldetag: 09.04.1996
(51) Int. Cl.: B23K 26/00

(54) **VERFAHREN UND VORRICHTUNG ZUM BEARBEITEN VON BELIEBIGEN 3D-FORMFLÄCHEN MITTELS LASER**
PROCESS AND DEVICE FOR LASER MACHINING OF ANY 3D SURFACE
PROCEDE ET DISPOSITIF D'USINAGE AU LASER DE SURFACES EN 3D QUELCONQUES

(30) Priorität: 06.04.1995 DE 29505985 U
(43) Veröffentlichungstag der Anmeldung: 21.01.1998
(60) Teilanmeldung: 98103286.5
(73) Patentinhaber: Polierwerkstatt Für Stahlformen Bestenlehrer GmbH, 91066 Herzogenaurach (DE)
(72) Erfinder: BESTENLEHRER, Alexander, D-91066 Herzogenaurach (DE)
(74) Vertreter: Winter, Brandl, Fürniss, Hübner, Röss, Kaiser, Polte, Kindermann Partnerschaft
(86) Internationale Anmeldenummer: DE9600621
(87) Internationale Veröffentlichungsnummer: WO9631315

(56) Entgegenhaltungen:
- DE-A- 3 711 470
- US-A- 4 977 512
- US-A- 4 986 664
- PATENT ABSTRACTS OF JAPAN vol. 012, no. 340 (M-740), 13.September 1988 & JP,A,63 101092 (TOSHIBA CORP), 6.Mai 1988,
- A. DONGES, R. NOLL : "Lasermesstechnik: Grundlagen und Anwendungen" 1993 , HÜTHIG BUCH VERLAG , HEIDELBERG XP002009312 siehe Seite 26 - Seite 30 siehe Seite 214 - Seite 215

## Beschreibung

Die vorliegende Erfindung betrifft ein Verfahren und eine Vorrichtung zum Bearbeiten, insbesondere zum Polieren und Strukturieren von beliebigen 3D-Formflächen bzw. Freiformflächen mittels eines Laser

Aus der DE-OS 42 41 527 ist es bekannt, Laserstrahlen, insbesondere gepulste Excimer-Laser zum Glätten von Metalloberflächen zu verwenden. Durch die gepulste Beaufschlagung mit Energiedichten im Bereich von 5 × 10⁷ Watt/cm² wird die Oberfläche des Metalls aufgeschmolzen. Durch die Verwendung eines UV- bzw. Excimer-Lasers geschieht dies nur in den obersten Randbereichen des Metalls bis zu einer Tiefe von 1 bis 2 µm, so daß keinerlei Verformungen oder Risse entstehen und die Metalloberfläche geglättet wird.

Aus der DE-OS-42 17 530, der DE-OS-39 22 377, der EP-A-0 419 999 und der US-A-4,825,035 sind Verfahren und Vorrichtungen zum Härten von hochbeanspruchten metallischen Oberflächen, wie z. B. Kolbenlaufflächen, bekannt.

Aus der DE-OS 41 33 620 ist es bekannt, metallische Oberflächen mittels Laserstrahl zu strukturieren. Hierbei durchläuft der Laserstrahl Bahnkurven auf der Metalloberfläche, deren Form der gewünschten Strukturierung entspricht.

Aus der DE-OS 44 01 597 ist eine Laserbearbeitungs- bzw. Laserschneidvorrichtung bekannt, bei der die zu erzeugende Schnittform in Form von CAD-Daten eingegeben werden kann.

Aus der DE-OS 41 06 008 ist ein automatischer Schweißroboter bekannt, bei dem die Qualität der Schweißnähte online über optische Überwachung der Schweißnähte bzw. der Schweißspritzer überwacht wird.

Aus der DE-OS-37 11 470 ist ein Verfahren zum Herstellen eins dreidimensionalen Modells bekannt, das aus einer Vielzahl von Scheiben zusammengesetzt ist, die die Modellkonturen aufweisen und aus Plattenwerkstoff durch materialabtragende Bearbeitung mittels Laser hergestellt werden. Hierbei wird an einer bestimmten Stelle solange Material abgetragen, bis der SOLL-Wert erreicht ist.

Aus der DE-OS-42 19 809 ist ein Verfahren und eine Vorrichtung zum kontrollierten Abtragen von Schichten von einer Oberfläche mittels Laser bekannt. Um die Steuerung bzw. Regelung der Abtragung zu vereinfachen wird gewährleistet, daß aufeinanderfolgend bearbeitete Teilflächen immer eine konstante Fläche aufweisen.

Die aus dem Stand der Technik bekannten Strahl- bzw. Laserbearbeitungsverfahren und -vorrichtungen weisen den Nachteil auf, daß im wesentlichen nur im voraus bekannte Formen damit bearbeitet werden können. Ein großtechnischer Einsatz und das Bearbeiten von beliebigen, kompliziert geformten 3D-Formflächen ist damit jedoch nicht möglich.

Aus der US-A-4,986,664 ist ein Verfahren und eine Vorrichtung zum kontrollierten Materialabtrag gemäß dem Oberbegriff der Ansprüche 1 und 11 bekannt. Hierbei wird die zu bearbeitende Oberfläche unmittelbar vor der Bearbeitung vermessen und auf der Basis dieser Meßdaten werden geeignete Bearbeitungsparameter gewählt.

Aus der JP-A-63101092 ist eine Vorrichtung zum Bearbeiten von 3D-Formflächen bekannt, bei der die zu bearbeitenden Fläche unmittelbar vor der Bearbeitung vermessen wird. Anhand der Meßdaten und der gewünschten Form werden geeignete Bearbeitungsparameter errechnet und in eine entsprechende Materialbearbeitung umgesetzt.

Es ist daher Aufgabe der Erfindung, ein Verfahren und eine Vorrichtung zum Bearbeiten, insbesondere zum Polieren und Strukturieren von Werkstücken zur Verfügung zu stellen, mit der sich beliebige 2D- bzw. 3D-Formflächen einfach und zuverlässig bearbeiten lassen.

Die Lösung dieser Aufgabe erfolgt durch die Merkmale des Anspruchs 1 bzw. 11.

Dadurch, daß mittels der 3D-Konturmeßeinrichtung zunächst die tatsächliche Oberflächenform und -struktur ermittelt wird, kann der Laserstrahl hinsichtlich Leistung, Abstand vom Werkstück, Bearbeitungsgeschwindigkeit (Geschwindigkeit mit der der Arbeitstrahl über die zu bearbeitende Oberfläche fährt), Impulsdauer, Impulsfrequenz, Winkel zwischen Oberfläche und optischer Achse des Arbeitstrahls und Anzahl des aufeinanderfolgenden Überstreichens der zu bearbeitenden Oberflächen, so optimiert werden, daß eine gewünschte Rauhigkeit bzw. Glätte erreicht wird. Auf diese Weise ist es nicht nur möglich, die Oberfläche zu glätten bzw. zu polieren, sondern es können auch zusätzlich materialabtragende, die Form bzw. Kontur des Werkstücks verändernde Bearbeitungsschritte zwischengeschaltet werden. Dadurch, daß eine Strahlbearbeitungseinrichtung einen fokussierten Bearbeitungsstrahl mit einer Rayleighlänge von 300 µm und mehr erzeugt, wird erreicht, daß kleine Änderungen des Abstandes zwischen Optik und Werkstück um die Brennweite herum aufgrund von Vibrationen und Zittern der Roboterarme lediglich zu vernachlässigbaren Schwankungen der Strahlfluenz auf der Werkstückoberfläche führen. Somit wird die Zuverlässigkeit erhöht.

Durch das erfindungsgemäße Verfahren wird erst unmittelbar vor dem Bearbeiten der jeweiligen Teilfläche deren IST-Form ermittelt und mit der Soll-Form verglichen. Wegen der minimalen Zeitdauer zwischen Erfassung der IST-Form und eigentlicher Bearbeitung werden den Materialabtrag oder den Polierprozeß beeinflussende Störungen unwahrscheinlicher. Auch kann dadurch erreicht werden, daß derartige Störungen die Messung der IST-Form und die Bearbeitung der jeweiligen Teilfläche in gleicher Weise beeinflussen, so daß sich die Störungen herausmitteln.

Trägt man den durch einen Laserstrahl verursachten Materialabtrag als Funktion der Laserfluenz auf der zu bearbeitenden Fläche auf, so ergibt sich bei Konstanthaltung anderer Bearbeitungsparameter eine Kurve, die im Bereich niedriger Laserfluenz flach ansteigt, im Bereich mittlerer Laserfluenz stark ansteigt und im Bereich hoher Laserfluenz wieder flacher ansteigt. Gemäß einer bevorzugten Ausführungsform der Erfindung wird der Laser in den Bereichen mit flachem Anstieg betrieben, da sich dort geringfügige Fluenzschwankungen kaum auf den Materialabtrag auswirken, so daß sich glatte, gleichmäßige Oberflächen ergeben.

Beim Laserpolieren von Werkstücken wird vorzugsweise der flache Bereich der Kurve bei niedriger Laserfluenz genutzt, da beim Laserpolieren kein Abtrag erwünscht ist.

Dadurch, daß die erfindungsgemäße Vorrichtung eine Konturmeßeinrichtung umfaßt, die die IST-Form der zu bearbeitenden Teilfläche unmittelbar vor dem Bearbeiten aufnimmt, können die Bearbeitungsparameter gezielt und zeitnah gesteuert werden.

Gemäß einer bevorzugten Ausführungsform ist ein zweites 3D-Konturmeßgerät vorgesehen, das dem Laserstrahl nachläuft. Damit kann im Sinne einer Qualitätskontrolle festgestellt werden, ob z. B. die Laserpolierung mit ausreichender Verringerung der Rauhigkeit durchgeführt worden ist oder nicht. Zusätzlich können die Meßdaten dieses nachlaufenden Konturmeßgeräts auch dazu verwendet werden, die Strategie hinsichtlich eines mehrmaligen Überstreichens der zu polierenden Fläche mit dem Laserstrahl zu optimieren.

Die Konturmeßeinrichtungen können die Form durch optische Abtastung, z. B. Triangulation, oder durch mechanische Abtastung ermitteln.

Die übrigen Unteransprüche beziehen sich auf weitere vorteilhafte Ausgestaltungen der Erfindung.

Weitere Merkmale, Einzelheiten und Vorteile der Erfindung ergeben sich aus der nachfolgenden Beschreibung einer beispielhaften Ausführungsform anhand der Zeichnung. Es zeigt:
- Fig. 1: eine schematische Darstellung einer beispielhaften Ausführungsform der erfindungsgemäßen Laserbearbeitungsvorrichtung,

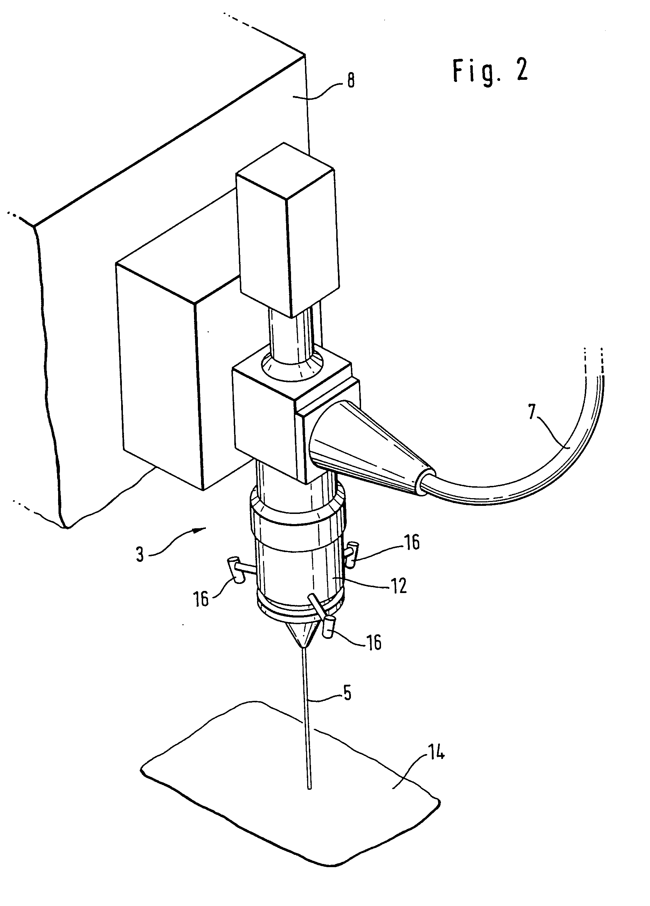

- Fig. 2: ein Detail der Ausführungsform nach Fig. 1,
- Fig. 3: eine schematische Darstellung zur Erläuterung der Arbeitsweise einer beispielhaften Ausführungsform der Erfindung,
- Fig. 4: ein Flußdiagramm zur Veranschaulichung einer bevorzugten Variante des erfinderischen Verfahrens,
- Fig. 5: eine qualitative Darstellung des Materialabtrags als Funktion der Laserfluenz, und
- Fig. 6a und 6b: Abbildungsoptiken mit großer und kleiner Rayleighlänge.

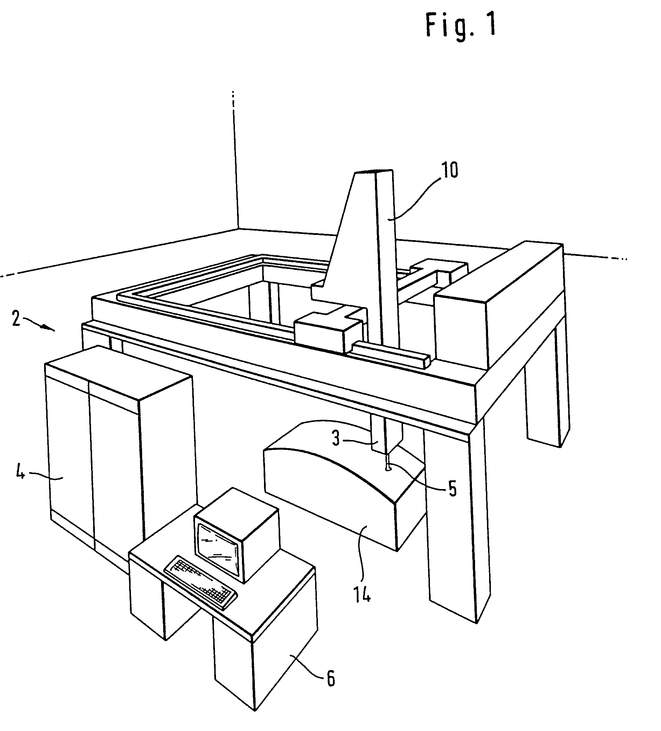

Die in Fig. 1 gezeigte beispielhafte Ausführungsform der Laserbearbeitungsvorrichtung gemäß der vorliegenden Erfindung umfaßt eine Lasereinrichtung 2 bestehend aus einem Laserkopf 3 und einer Laserstrahlerzeugungseinrichtung 4 mit zugehöriger Steuereinrichtung 6, durch die sich Bearbeitungsparameter, wie z. B. Pulsfrequenz, Pulsdauer, Fokkussierungsgrad, Vorschub, etc. des Arbeits- bzw. Laserstrahls 5 einstellen und steuern bzw. regeln lassen. Die Laserstrahlerzeugungseinrichtung 4 ist über ein Lichtleitkabel 7 mit dem Laserkopf 3 verbunden. Der Laserkopf 3 ist an einer Laserkopfhalterung 8 befestigt, die Teil einer XYZ-Positioniereinrichtung 10 ist. Der Laserkopf 3 umfaßt auch eine Abbildungsoptik bzw. Fokussiereinrichtung 12, durch die der aus dem Laserkopf 3 austretende Laserstrahl 5 auf der zu bearbeitenden Oberfläche eines Werkstücks 14 fokussiert wird. Auf diese Weise läßt sich der Laserkopf 3 und damit der aus dem Laserkopf 3 austretende Laserstrahl 5 in allen drei Raumrichtungen X, Y und Z bewegen und positionieren.

Mit dem Laserkopf 3 verbunden sind auch Meßsensoren 16, mittels denen sich die die Kontur der Oberfläche des zu bearbeitenden Werkstücks 14, beispielsweise durch Triangulation, unmittelbar vor dem Überstreichen des Laserstrahls 5 und unmittelbar nach dem Überstreichen des Laserstrahls 5 ermitteln läßt. Auf diese Weise wird unmittelbar während der Bearbeitung das Ergebnis der Bearbeitung mit dem Laserstrahl 5 überprüft und die Anzahl des Überstreichens der 3D-Formfläche mit dem Laserstrahl 5 kann entsprechend dem gewünschten Arbeitsergebnis optimiert werden.

Die Steuerung der gesamten Anlage erfolgt durch die Steuereinrichtung 6, durch die sowohl die Lasereinrichtung 2, bestehend aus Laserkopf 3 und Laserstrahlerzeugungseinrichtung 4, als auch die Positioniereinrichtung 10 und Meßsensoren 16 gesteuert und geregelt werden. Die Steuereinrichtung 6 bildet zusammen mit den Meßsensoren 16 eine 2D- bzw. 3D-Konturmeßeinrichtung 18. Bei der Steuereinrichtung 6 handelt es sich beispielsweise um einen Mikrocomputer mit einer Massenspeichereinrichtung. In diese Speichereinrichtung können beispielsweise CNC-Daten des zu bearbeitenden Werkstücks 14 eingespeichert werden. Mit der Konturmeßeinrichtung 18 kann damit die Soll-Ist-Abweichung erfaßt werden und die Anzahl der Bearbeitungsschritte und ebenso die Laserstrahlcharakteristiken entsprechend eingestellt werden.

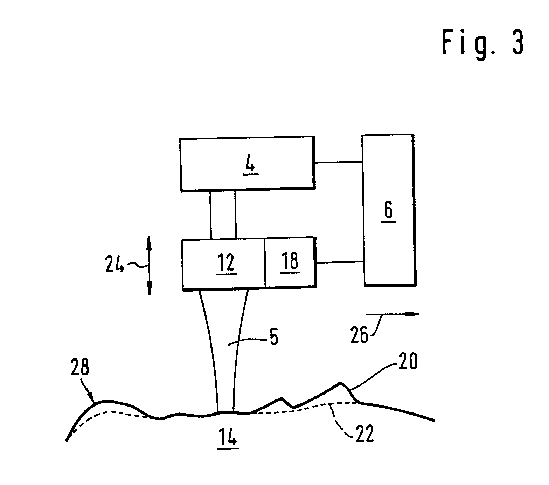

Fig. 3 zeigt eine schematische Darstellung der in Fig. 1 dargestellten Vorrichtung mit der Laserstrahlerzeugungseinrichtung 4, der Steuereinrichtung 6 und der Abbildungsoptik 12 aus der der Laserstrahl 5 austritt und auf die zu bearbeitende Oberfläche des Werkstücks 14 auftritt, das als Konturlinie 20 (IST-Form) dargestellt ist. Strichliert ist die SOLL-Form 22 dargestellt. Die Konturmeßeinrichtung 18 ist hier in die Abbildungsoptik 12 integriert und der Arbeitsstrahl 5 wird gleichzeitig als Meßstrahl für die Konturmeßeinrichtung 18 verwendet. Durch die Steuereinrichtung 6 läßt sich mittels nicht näher dargestellter Stellantriebe der Abstand zwischen Abbildungsoptik 12 und der Werkstückoberfläche 20 Variieren, was durch einen Doppelpfeil 24 angedeutet ist. Ebenfalls mit der Steuereinrichtung 6 und entsprechender Stellantriebe wird auch der Vorschub bezüglich des Werkstücks 14 bewirkt und gesteuert. Dies ist durch einen Pfeil 26 dargestellt. Wie aus Fig. 3 zu ersehen ist, wird der Übergang von der IST-Form 20 zur SOLL-Form 22 nicht notwendigerweise mit einem einmaligen Überstreichen des Laserstrahls 5 erreicht. In dem bereits überstrichenen Bereich 28 ist immer noch eine Abweichung zwischen SOLL- und IST zu sehen.

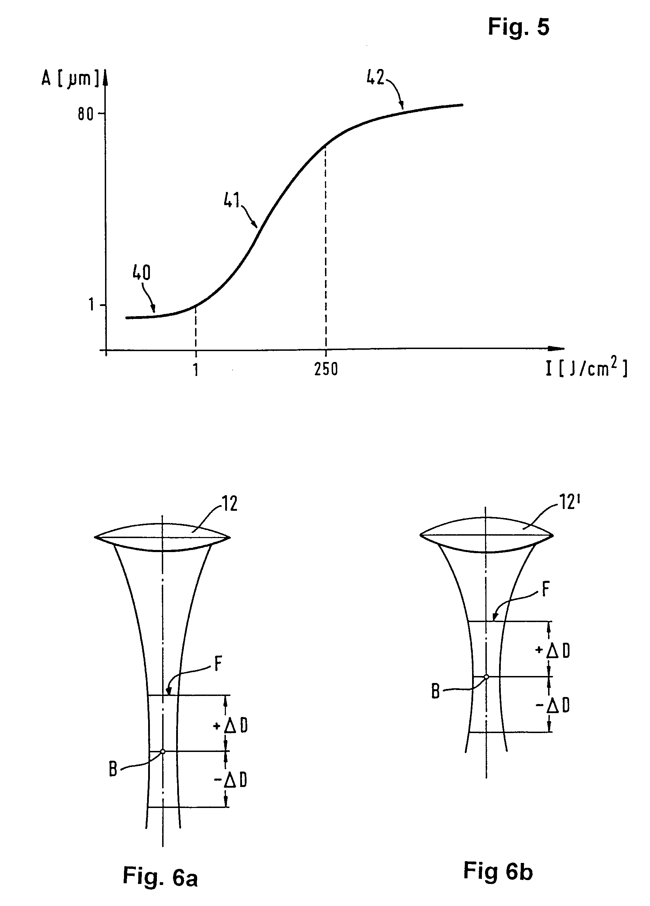

Um die Materialbearbeitung unempfindlicher gegenüber Vibrationen und zittern zu machen wird der Bearbeitungsstrahl mit einer Rayleighlänge von 300 µm und größer erzeugt. Details hierzu sind in Verbindung mit Fig. 6 erläutert.

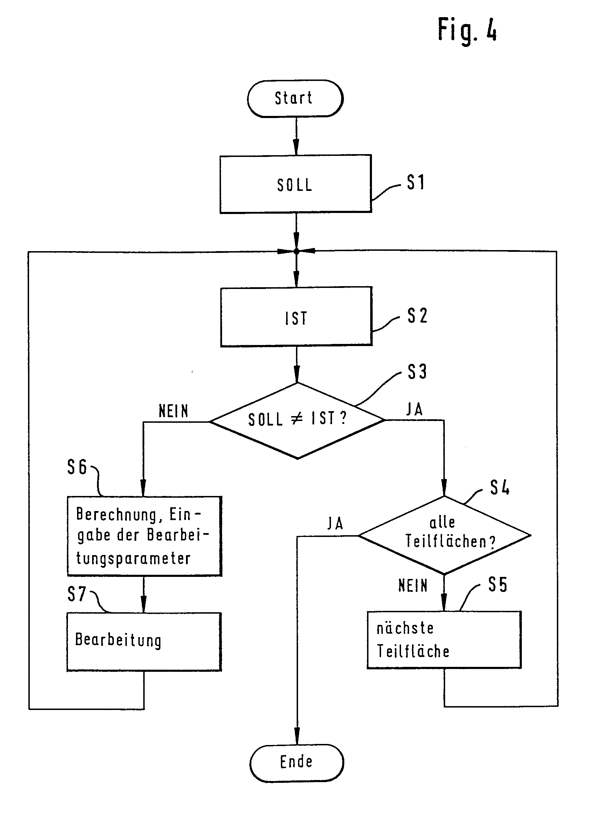

Fig. 4 zeigt eine Flußdiagramm des erfindungsgemäßen Verfahrens mit dem die Oberfläche eines Werkstücks 14 von der IST-Form in die SOLL-Form überführt wird. In einem Schritt S1 wird zunächst in einem Referenzkoordinatensystem die gewünschte SOLL-Form festgelegt. Die SOLL-Form kann beispielsweise in Form von CNC- oder CAD-Daten vorliegen. In einem Schritt S2 wird dann die IST-Form des noch unbearbeiteten oder vorbearbeiteten Werkstücks 14 ermittelt und in Koordinaten des Referenzkoordinatensystems dargestellt. In einem Schritt S3 wird abgefragt, ob der IST-Wert an der zu bearbeitenden Teilfläche des Werkstücks 14 bereits mit dem SOLL-Wert übereinstimmt oder nicht. Ist dies der Fall wird in einem Schritt S4 abgefragt, ob bereits alle Teilflächen bearbeitet sind oder nicht. Ist dies der Fall, ist die Bearbeitung beendet. Sind noch nicht alle Teilflächen bearbeitet, so erfolgt in einem Schritt S5 der Übergang zur nächsten Teilfläche und die Bearbeitung beginnt wieder bei Schritt S2.

Ergibt die Abfrage in Schritt S3 ein NEIN, so wird zu einem Schritt S6 verzweigt, in dem aufgrund des Vergleichs von SOLL- und IST-Daten, aufgrund externer Eingaben über das zu bearbeitende Material, etc. die Bearbeitungsparamer für den Laser 2 und die Strategie der Bearbeitung ermittelt wird. In einem Schritt S7 wird dann die Laserbearbeitung der jeweiligen Teilfläche entsprechend den in Schritt S6 ermittelten Parametern ausgeführt. Anschließend wird zurück zu dem Schritt S2 verzweigt.

In Fig. 5 ist der durch den Laserstrahl 5 verursachte Materialabtrag A in µm als Funktion der Laserfluenz (Leistungsdichte mal Bestrahlungszeit) in J/cm² aufgetragen. Es ergibt sich ein Kurvenverlauf in der Form eines langgezogenen S mit einem flachen Kurvenverlauf im Bereich geringer Laserfluenz, Bezugszeichen 40, und im Bereich hoher Laserfluenz, Bezugszeichen 42, und einem steilen Kurvenverlauf im Bereich mittlerer Laserfluenz, Bezugszeichen 41. Die in Fig. 5 angegebenen Werte gelten für einen Kupferdampflasersystem, wie er aus der DE-OS 44 12 443 bekannt ist und auf die hier vollinhaltlich bezug genommen wird. Für einen solchen Kupferdampflaser und Aluminium als zu bearbeitendem Material endet der Bereich 40 bzw. beginnt der Bereich 41 bei ca. 1 J/cm² und das Ende des Bereichs 41 bzw. der Beginn des Bereichs 42 liegt bei ca. 250 J/cm². Bis zu einer Laserfluenz von ungefähr 1 J/cm² liegt der Aluminiumabtrag im Bereich von 1 µm, Bereich 40, und im Bereich 42 mit einer Laserfluenz über 250 J/cm² liegt der Aluminiumabtrag bei ca. 80 µm.

Der Laser 2 wird erfindungsgemäß in den Bereichen 40 und 42 mit flachem Kurvenverlauf betrieben, da dort geringe Fluenzschwankungen, wie sie beispielsweise durch Variationen des Abstands zwischen Laserkopf 3 und zu bearbeitender Fläche aufgrund von Vibrationen auftreten, sich kaum auf die Größe des Materialabtrags auswirken. Folglich ist eine kontrollierte und genaue Formgebung einfacher. Der Bereich 40 mit niedriger Laserintensität ist insbesondere beim Laserpolieren vorteilhaft, da beim Laserpolieren ein großer Materialabtrag nicht gewünscht ist.

Die erfindungsgemäße Maßnahme mittels der die Lasereinrichtung 2 unempfindlicher gegenüber Lage- bzw. Positionsschwankungen gemacht wird, wie sie bei Roboterarmen unweigerlich auftreten, wird anhand von Fig. 6a und 6b erläutert. Hierzu wird in der Lasereinrichtung 2 eine Fokussiervorrichtung bzw. eine Abbildungsoptik 12 verwendet, die eine große Rayleighlänge, vorzugsweise ≥ 300 µm aufweisen. Bekanntlich ist bei realen optischen Systemen der Brennpunkt B kein idealer mathematischer Punkt, sondern ein Raumbereich. Die Rayleighlänge ist ein Maß für die Variation des Querschnitts des Strahlenbündels im Bereich des geometrischen Brennpunkts. Je kleiner die Rayleighlänge ist, desto mehr stimmt das reale Strahlenbündel mit dem geometrischen Strahlengang überein.

Fig. 6a zeigt eine Optik 12 mit großer Rayleighlänge und Fig. 6b eine Optik 12' mit kleiner Rayleighlänge. Variiert in beiden Fällen der Abstand zwischen Abbildungsoptik 12, 12' und zu bearbeitender Fläche um den Brennpunkt B um ΔD, so schwankt bei kleiner Rayleighlänge - Fig. 6b - die Querschnittsfläche F des Strahlenbündels im Bereich zwischen +ΔD und -ΔD und damit die Laserintensität erheblich mehr als bei großer Rayleighlänge - Fig. 6a. Eine Lasereinrichtung 2 mit einer Abbildungsoptik 12 mit großer Rayleighlänge ist daher unempfindlicher gegenüber Vibrationsschwankungen.

## Patentansprüche

1. Verfahren zum Bearbeiten, insbesondere zum Polieren und Strukturieren, von beliebigen 2D- und 3D-Formflächen eines Werkstücks mittels einer Strahlbearbeitungseinrichtung, mit den Verfahrensschritten:
a) Festlegen der dreidimensionalen Koordinaten der herzustellenden 2D- bzw. 3D-Formfläche in dem Referenzkoordinatensystem (SOLL-Daten, SOLL-Form);
b) Abtasten der Oberfläche des zu bearbeitenden Werkstücks mittels einer 3D-Konturmeßeinrichtung zum Bestimmen der genauen, tatsächlichen Oberflächenform des zu bearbeitenden Werkstücks in einem Referenzkoordinatensystem (IST-Daten, IST-Form);
c) Errechnen von Bearbeitungsparametern für die Strahlbearbeitungseinrichtung aufgrund der in a) festgelegenten SOLL-Daten und aufgrund der durch die 3D-Konturmeßeinrichtung in b) ermittelten IST-Daten;
d) Sukzessives Bearbeiten von aneinander angrenzenden Teilflächen mit der Strahlbearbeitungseinrichtung auf der Basis der in Schritt c) ermittelten Bearbeitungsparameter;
e) erneutes Abtasten der in Schritt d) bearbeiteten Teilflächen mittels der 3D-Konturmeßeinrichtung zum Bestimmen der nunmehr nach der Bearbeitung vorliegenden Oberflächenform des Werkstücks (aktualisierte IST-Daten); und
f) gegebenenfalls Wiederholung der Schritte b) bis e) bis die gewünschte Oberflächenform (SOLL-Form) erreicht ist; **dadurch gekennzeichnet**,
e) daß die Strahlbearbeitungseinrichtung eine Fokusiervorrichtung umfaßt, die einen fokusierten Bearbeitungsstrahl mit einer Rayleighlänge größer oder gleich 300 µm erzeugt.

2. Verfahren nach Anspruch 1, dadurch gekennzeichnet, daß in Schritt f) die Schritte c) bis e) solange wiederholt werden, bis die Abweichung der SOLL-Daten von den IST-Daten innerhalb eines ersten Toleranzbereiches liegt.

3. Verfahren nach einem der vorhergehenden Ansprüche, dadurch gekennzeichnet, daß die Festlegung der SOLL-Daten und die erstmalige Ermittlung der IST-Daten vertauscht sind.

4. Verfahren nach wenigstens einem der vorhergehenden Ansprüche, dadurch gekennzeichnet, daß die Strahlbearbeitungseinrichtung in einem Bereich betrieben wird, in dem die Änderungen des Materialabtrags aufgrund von Schwankungen der Strahlintensität möglichst gering sind.

5. Verfahren nach Anspruch 4, dadurch gekennzeichnet, daß die Strahlbearbeitungseinrichtung beim Laserpolieren in einem Bereich mit geringer Laserintensität betrieben wird.

6. Verfahren nach wenigstens einem der vorhergehenden Ansprüche, dadurch gekennzeichnet, daß die 3D-Konturmeßeinrichtung mit Triangulation arbeitet.

7. Verfahren nach wenigstens einem der vorhergehenden Ansprüche, dadurch gekennzeichnet, daß die Strahlbearbeitungseinrichtung einen Laserstrahl als Arbeitsstrahl erzeugt.

8. Verfahren nach Anspruch 7, dadurch gekennzeichnet, daß die Strahlbearbeitungseinrichtung einen gepulsten Laserstrahl erzeugt.

9. Verfahren nach Anspruch 7 oder 8, dadurch gekennzeichnet, daß der Arbeitsstrahl der Strahlbearbeitungseinrichtung als Meßstrahl der 3D-Konturmeßeinrichtung verwendet wird.

10. Verfahren nach wenigstens einem der vorhergehenden Ansprüche, dadurch gekennzeichnet, daß Arbeitsstrahl senkrecht zu der zu bearbeitenden Oberfläche ausgerichtet wird.

11. Vorrichtung zum Bearbeiten, insbesondere zum Polieren und Strukturieren, von beliebigen 3D-Formflächen mittels eines Laserstrahls, mit:
einer Lasereinrichtung (2) zum Erzeugen eines Laserstrahls (5) mit bestimmten Charakteristiken;
einer Einrichtung (7, 8, 10) zum Führen und Leiten des Laserstrahls (5) derart, daß zeitlich aufeinanderfolgend Teilflächen der zu bearbeitenden Fläche durch den Laserstrahl (5) überstrichen werden;
einer ersten 3D-Konturmeßeinrichtung (18) zum Abtasten und Aufnehmen des 3D-Profils der zu bearbeitenden 3D-Formfläche durch Abtasten der von dem Laserstrahl (5) überstrichenen Teilflächenbereiche unmittelbar vor dem die zu bearbeitende Teilfläche überstreichenden Laserstrahl (5); und
einer Steuereinrichtung (6) zur Steuerung der 3D-Konturmeßeinrichtung (18) und zur Steuerung und Regelung der Lasereinrichtung (2) und der Einrichtung (7, 8, 10) zum Führen und Leiten des Laserstrahls (5) in Abhängigkeit des von der 3D-Konturmeßeinrichtung (18) erfaßten 3D-Profils; **dadurch gekennzeichnet**,
daß die Lasereinrichtung (2, 4) eine Fokusiervorrichtung (12) umfaßt, die einen fokusierten Bearbeitungsstrahl mit einer Rayleighlänge größer oder gleich 300 µm erzeugt.

12. Vorrichtung nach Anspruch 11, dadurch *gekennzeichnet*, *daß* die Steuereinrichtung (6) eine Speichereinrichtung umfaßt, in der das Soll-3D-Profil (22) der zu bearbeitenden Formfläche (14) beispielsweise in Form von CNC-Daten gespeichert ist.

13. Vorrichtung nach Anspruch 11 oder 12 *gekennzeichnet durch* eine zweite 3D-Konturmeßeinrichtung (18) zum Abtasten und Aufnehmen des 3D-Profils der zu bearbeitenden 3D-Freiformfläche durch Abtasten der von dem Laserstrahl (5) überstrichenen Teilflächenbereiche unmittelbar nach dem die zu bearbeitende Teilfläche überstreichenden Laserstrahl (5).

14. Vorrichtung nach Anspruch 13 *dadurch gekennzeichnet*, *daß* die Meßergebnisse der zweiten 3D-Konturmeßeinrichtung (18) der Steuereinrichtung (6) zur Steuerung und Regelung der Lasereinrichtung (2) und der Einrichtung (7, 8, 10) zum Führen und Leiten des Laserstrahls (5) zugeführt werden.

15. Vorrichtung nach wenigstens einem der vorhergehenden Ansprüche 11 bis 14, *dadurch gekennzeichnet*, *daß* die Lasereinrichtung (2) einen gepulsten Laserstrahl erzeugt.

16. Vorrichtung nach wenigstens einem der vorhergehenden Ansprüche 11 bis 15, *dadurch gekennzeichnet, daß* die Lasereinrichtung (2) einen UV-Laserstrahl erzeugt.

17. Vorrichtung nach Anspruch 15, *dadurch gekennzeichnet*, *daß* die Lasereinrichtung (2) einen Excimerlaser umfaßt.

18. Vorrichtung nach wenigstens einem der vorhergehenden Ansprüche 11 bis 15, *dadurch gekennzeichnet, daß* die Lasereinrichtung (2) eine Cu-Dampf-Laserablationseinrichtung ist.

## Claims

1. A method of machining, more particularly polishing and structuring, any 2D ad 3D shaped surfaces of a workpiece by means of a beam machining device, comprising the method steps:
a) Specifying, in the reference co-ordinate system, the three-dimensional co-ordinates of the 2D or 3D shaped surface which is to be produced (SET data, SET shape);
b) Scanning, by means of a 3D contour measuring device, the surface of the workpiece for machining, in order to detect, in a reference co-ordinate system, the exact actual surface shape of the workpiece for machining (ACTUAL data, ACTUAL shape);
c) Calculating machining parameters for the beam machining device on the basis of the SET data specified in a) and on the basis of the ACTUAL data detected by the 3D contour measuring device in b);
d) Successive machining of adjoining part surfaces by means of the beam machining device on the basis of the machining parameters determined in step c);
e) Renewed scanning, by means of the 3D contour measuring device, of the part surfaces measured in step d), to determine the surface shape of the workpiece now present after machining (updated ACTUAL data); and
f) If necessary, repetition of steps b) to e) until the required surface shape (SET shape) is achieved; *characterised in that*
e) The beam machining device comprises a focusing device which generates a focused machining beam with a Rayleigh length greater than or equal to 300 µm.

2. A method according to claim 1, *characterised in that* in step f) the steps c) to e) are repeated until the deviation of the SET data from the ACTUAL data is within a first tolerance range.

3. A method according to any one of the preceding claims, *characterised in that* the specification of the SET data and the first detection of the ACTUAL data are exchanged.

4. A method according to at least one of the preceding claims, *characterised in that* the beam machining device is operated in a range in which the variations in the material removal due to fluctuations in the beam intensity are as small as possible.

5. A method according to claim 4, *characterised in that* in the case of laser polishing the beam machining device is operated in a range of low laser intensity.

6. A method according to at least one of the preceding claims, *characterised in that* the 3D contour measuring device operates with triangulation.

7. A method according to at least one of the preceding claims, *characterised in that* the beam machining device generates a laser beam as the working beam.

8. A method according to claim 7, *characterised in that* the beam machining device generates a pulsed laser beam.

9. A method according to claim 7 or 8, *characterised in that* the working beam of the beam machining device is used as the measuring beam of the 3D contour measuring device.

10. A method according to at least one of the preceding claims, *characterised in that* the working beam is aligned perpendicularly to the surface for machining.

11. Apparatus for machining, more particularly polishing and structuring, any 3D shaped surfaces by means of a laser beam, comprising:
a laser device (2) for generating a laser beam (5) with specific characteristics;
a device (7, 8, 10) for guiding and directing the laser beam (5) in such a manner that chronologically successive part surfaces of the surface for machining are covered by the laser beam (5);
a first 3D contour measuring device (18) for scanning and recording the 3D profile of the 3D shaped surface for machining, by scanning the part surface zones swept by the laser beam (5), such scanning being effected directly before the laser beam (5) sweeping the part surface for machining; and
a control device (6) for controlling the 3D contour measuring device (18) and for controlling and regulating the laser device (2) and the device (7, 8, 10) for guiding and directing the laser beam (5) in dependence on the 3D profile detected by the 3D contour measuring device (18); *characterised in that*
the laser device (2, 4) comprises a focusing device (12) which generates a focused machining beam with a Rayleigh length greater than or equal to 300 µm.

12. Apparatus according to claim 11, *characterised in that* the control device (6) comprises a storage device in which the set 3D profile (22) of the shaped surface (14) for machining is stored, e.g. in the form of CNC data.

13. Apparatus according to claim 11 or 12, *characterised by* a second 3D contour measuring device (18) for scanning and recording the 3D profile of the 3D free-form surface for machining, by scanning the part surface zones swept by the laser beam (5), such scanning being effected directly after the laser beam (5) sweeping the part surface for machining.

14. Apparatus according to claim 13, *characterised in that* the measurement results of the second 3D contour measuring device (18) are fed to the control device (6) for controlling and regulating the laser device (2) and the device (7, 8, 10) for guiding and directing the laser beam (5).

15. Apparatus according to at least one of the preceding claims 11 to 14, *characterised in that* the laser device (2) generates a pulsed laser beam.

16. Apparatus according to at least one of the preceding claims 11 to 15, *characterised in that* the laser device (2) generates an ultra-violet laser beam.

17. Apparatus according to claim 15, *characterised in that* the laser device (2) comprises an excimer laser.

18. Apparatus according to at least one of the preceding claims 11 to 15, *characterised in that* the laser device (2) is a Cu-vapour laser ablation device.

## Revendications

1. Procédé pour réaliser l'usinage, notamment le polissage et la structuration, de surfaces quelconques de forme bidimensionnelle et tridimensionnelle d'une pièce à usiner à l'aide d'un dispositif d'usinage à faisceau, comprenant les étapes opératoires :
a) détermination des coordonnées tridimensionnelles de la surface de forme bidimensionnelle ou tridimensionnelle dans le système de coordonnées de référence (données de CONSIGNE, forme de CONSIGNE);
b) exploration de la surface de la pièce à usiner à l'aide d'un dispositif de mesure de contour tridimensionnel pour déterminer la forme de surface précise effective de la pièce à usiner dans un système de coordonnées de référence (données REELLES, forme REELLE) ;
c) calcul de paramètres d'usinage pour le dispositif d'usinage à faisceau sur la base des données de CONSIGNE déterminées dans a) et sur la base des données REELLES déterminées au moyen du dispositif de mesure de contour tridimensionnel dans b) ;
d) usinages successifs de surfaces partielles contiguës, à l'aide du dispositif d'usinage à faisceau sur la base des paramètres d'usinage déterminés lors de l'étape c) ;
e) nouvelle exploration des surfaces partielles usinées lors de l'étape d) à l'aide du dispositif de mesure de contour tridimensionnel pour la détermination de la forme, maintenant présente après l'usinage, de la surface de la pièce à usiner (données REELLES actualisées) ; et
f) éventuellement répétition des étapes b) à e) jusqu'à ce que la forme de surface désirée (forme de CONSIGNE) soit atteinte ; caractérisé en ce
e) que le dispositif d'usinage à faisceau comprend un dispositif de focalisation, qui produit un faisceau d'usinage focalisé avec une longueur de Rayleigh supérieure ou égale à 300 µm.

2. Procédé selon la revendication 1, caractérisé en ce que lors de l'étape f), les étapes c) à e) sont répétées jusqu'à ce que l'écart entre les valeurs de CONSIGNE et les valeurs REELLES se situe à l'intérieur d'une première plage de tolérance.

3. Procédé selon l'une des revendications précédentes, caractérisé en ce que la détermination des données de CONSIGNE et la détermination, effectuée pour la première fois, des données REELLES sont permutées.

4. Procédé selon au moins l'une des revendications précédentes, caractérisé en ce que le dispositif d'usinage à faisceau fonctionne dans une gamme, dans laquelle les variations de l'enlèvement de matière sur la base de variations de l'intensité du faisceau sont aussi faibles que possible.

5. Procédé selon la revendication 4, caractérisé en ce que le dispositif d'usinage avec faisceau fonctionne dans le cas du polissage par laser, dans une gamme ayant une faible intensité laser.

6. Procédé selon au moins l'une des revendications précédentes, caractérisé en ce que le dispositif de mesure de contour tridimensionnel travaille par triangulation.

7. Procédé selon au moins l'une des revendications précédentes, caractérisé en ce que le dispositif d'usinage avec faisceau produit un faisceau laser en tant que faisceau de travail.

8. Procédé selon la revendication 7, caractérisé en ce que le dispositif d'usinage à faisceau produit un faisceau laser pulsé.

9. Procédé selon la revendication 7 ou 8, caractérisé en ce que le faisceau laser du dispositif d'usinage à faisceau est utilisé en tant que faisceau de mesure du dispositif de mesure de contour tridimensionnel.

10. Procédé selon au moins l'une des revendications précédentes, caractérisé en ce que le faisceau de travail est dirigé perpendiculairement à la surface à usiner.

11. Dispositif pour usiner, notamment pour polir et structurer, des surfaces de forme tridimensionnelle quelconque à l'aide d'un faisceau laser, comprenant :
un dispositif laser (2) pour produire un faisceau laser (5) ayant des caractéristiques déterminées ;
un dispositif (7, 8, 10) pour guider et diriger le faisceau laser (5) de telle sorte que des surfaces partielles de la surface à usiner sont parcourues successivement dans le temps par le faisceau laser (5) ;
un premier dispositif de mesure de contour tridimensionnel (18) pour l'exploration et l'enregistrement du profil tridimensionnel de la surface de forme tridimensionnelle à usiner, par exploration des zones de surface partielles parcourues par le faisceau laser (5), juste avant que le faisceau laser (5) balaye la surface partielle à usiner ; et
un dispositif de commande (5) pour commander le dispositif de mesure de contour tridimensionnel (18) et pour commander et régler le dispositif à laser (2) et le dispositif (7, 8, 10) servant à guider et diriger le faisceau laser (5) en fonction du profil tridimensionnel détecté par le dispositif de mesure de contour tridimensionnel (18) ; caractérisé en ce
que le dispositif à laser (2, 4) comprend un dispositif de focalisation (12), qui produit un faisceau d'usinage focalisé ayant une longueur de Rayleigh supérieure ou égale à 300 µm.

12. Dispositif selon la revendication 11, caractérisé en ce que le dispositif de commande (6) comprend un dispositif de mémoire, dans lequel le profil tridimensionnel de consigne (22) de la surface de forme à usiner (14) est mémorisé par exemple sous la forme de données de commande numérique CNC.

13. Dispositif selon la revendication 1 ou 12, caractérisé par un deuxième dispositif de mesure de contour tridimensionnel (18) servant à explorer et enregistrer le profil tridimensionnel de la surface de forme libre tridimensionnel à usiner par exploration des zones de surface partielle parcourues par le faisceau laser (5), juste avant que le faisceau laser (5) balaye la surface partielle à usiner.

14. Dispositif selon la revendication 13, caractérisé en ce que les résultats de mesure du second dispositif de mesure de contour tridimensionnel (18) sont envoyés au dispositif de commande (6) pour la commande et la régulation du dispositif à laser (2) et du dispositif (7, 8, 10) pour guider et diriger le faisceau laser (5).

15. Dispositif selon au moins l'une des revendications précédentes 11 à 14, caractérisé en ce que le dispositif à laser (2) produit un faisceau laser pulsé.

16. Dispositif selon au moins l'une des revendications précédentes 1 à 15, caractérisé en ce que le dispositif à laser (2) produit un faisceau laser à ultraviolet.

17. Dispositif selon la revendication 15, caractérisé en ce que le dispositif à laser (2) comprend un laser excimère.

18. Dispositif selon au moins l'une des revendications précédentes 1 à 15, caractérisé en ce que le dispositif à laser (2) est un dispositif d'ablation à laser à vapeur de Cu.
